# EUROPÄISCHE PATENTANMELDUNG

(11) **EP 1 213 209 A2**
(43) Veröffentlichungstag der Anmeldung: **12.06.2002**
(21) Anmeldenummer: 01128790.1
(22) Anmeldetag: 04.12.2001
(51) Int. Cl.: B62D 33/00, B60P 1/04

(54) **Muldenkipper mit Selbstladeeinrichtung**

(30) Priorität: 11.12.2000 DE 10061632
(71) Anmelder: Bergmann, Johannes Hermann, 49733 Haren/Ems (DE)
(72) Erfinder: Bergmann, Johannes Hermann, 49733 Haren/Ems (DE)
(74) Vertreter: Habbel, Ludwig (Lutz), Dipl.-Ing.

(57) **Zusammenfassung**

Bei einem Muldenkipper, mit einer Mulde zur Aufnahme von Nutzlast, wobei die Mulde in einer ersten Bewegungsrichtung kippbeweglich gelagert ist zum Entladen der Nutzlast, und wobei die Mulde darüber hinaus in einer zweiten Bewegungsrichtung zusätzlich beweglich gelagert ist, und mit einer Selbstladeeinrichtung zum Beschicken der Mulde mit der Nutzlast, schlägt die Erfindung vor, daß die Selbstladeeinrichtung zusammen mit der Mulde die zusätzlichen Bewegungen in der zweiten Bewegungsrichtung ausführend gelagert ist.

## Beschreibung

Die Erfindung betrifft einen Muldenkipper nach dem Oberbegriff des Anspruches 1.

Derartige Muldenkipper werden üblicherweise als Dumper bezeichnet. Es handelt sich um Fahrzeuge, die üblicherweise kleiner sind als LKW's und die auf größeren Baustellen eingesetzt werden, um Ladegut, Schüttgut und alle Materialien, die innerhalb einer Baustelle benötigt werden, zu transportieren. Sie weisen zu diesem Zweck eine kippbare Mulde auf, die das Entleeren durch eine entsprechende Kippbewegung ermöglicht. Das zu ladende Transportvolumen liegt üblicherweise zwischen 1 und 3 m³.

Gattungsfremde Fahrzeuge müssen von Hand oder mittels eines Baggers beladen werden, so daß stets zwei Geräte erforderlich sind, um den Dumper betreiben zu können. Gattungsgemäße Muldenkipper hingegen verfügen über eine Selbstladeeinrichtung, die am Fahrzeugrahmen angeordnet ist und mittels derer der Fahrer des Muldenkippers das Fahrzeug selbständig beladen kann.

Außer der erwähnten Kippbeweglichkeit ist eine zweite Beweglichkeit der Mulde vorgesehen, z. B. kann sie drehbar auf dem Fahrgestell gelagert sein oder es kann vorgesehen sein, sie außer um die erste Kippachse um eine zweite Kippachse kippen zu könenn, so daß die Nutzlast z. B. nicht nach vorn, sondern zur Seite abgeladen werden kann. Dazu muß die Selbstladeeinrichtung in eine bestimmte Stellung bewegt werden, und auch in dieser Stellung ist die zweite Beweglichkeit der Mulde durch die Selbstladeeinrichtung eingeschränkt.

Der Erfindung liegt die Aufgabe zugrunde, die Beweglichkeit der Mulde möglichst optimal ausnutzen zu können, um eine möglichst vielseitige und flexible Einsetzbarkeit des Muldenkippers zu ermöglichen.

Diese Aufgabe wird durch einen Muldenkipper mit den Merkmalen des Anspruches 1 gelöst.

Die Erfindung schlägt mit anderen Worten vor, die Selbstladeeinrichtung nicht am Fahrzeugrahmen unabhängig von der Beweglichkeit der Mulde anzuordnen, sondern gemeinsam mit der Mulde bewegbar anzuordnen. Für eine beispielsweise drehbar gelagerte Mulde, die wahlweise in Fahrzeugrichtung oder zu einer oder auch beiden Seiten des Fahrzeuges abkippen kann, bedeutet dies, daß die Ladeeinrichtung gemeinsam mit der Mulde gedreht wird, so daß die Selbstladeeinrichtung der Mulde nicht hinderlich im Wege ist. Auf diese Weise werden Verfahrund Rangierzeiten verkürzt und die Zugänglichkeit von schlecht erreichbaren Stellen verbessert, so daß insgesamt eine erheblich bessere und flexiblere Einsetzbarkeit des Muldenkippers resultiert.

Vorteilhaft wird die Mulde mit einem Ladesystem versehen, welches fest an der Mulde angebaut ist. Auf überraschende Weise ergibt sich, daß die Mulde problemlos mit einer ausreichenden Stabilität ausgestaltet werden kann, um die erforderlichen Kräfte aufzunehmen. Insbesondere ergibt sich der Vorteil, daß die Rahmenkonstruktion des Fahrzeuges und die Lagerung der beweglich gelagerten Mulde nicht grundsätzlich verändert zu werden brauchen, so daß eine vergleichsweise preisgünstige Möglichkeit gegeben ist, ein Fahrzeug bzw. einen Fahrzeugtyp mit einer Selbstladeeinrichtung zu versehen, indem eine entsprechend ausgestattete Mulde verwendet wird.

Vorzugsweise ist die Ladeschaufel der Selbstladeeinrichtung dabei so angebracht, daß sie beim Überschwingen der Mulde das Ladegut automatisch entleert. Hierzu ist nicht notwendigerweise ein eigener Antrieb der Schaufel erforderlich, vielmehr kann durch die Ausgastaltung und Anlenkung der Schwinge während ihrere Bewegung und durch die Anordnung der Schaufel an der Schwinge diese selbsttätige Entleeerung bewirkt werden.

Die Flexibilität der Einsetzbarkeit des Muldenkippers kann insbesondere dadurch noch verbessert werden, daß nicht nur eine Selbstladeeinrichtung betrieben werden kann, sondern durch Austausch der Ladeschaufel gegen andere Werkzeuge das Fahrzeug auch zu anderen als reinen Lade- und Transportarbeiten eingesetzt werden kann, beispielsweise zum Planieren oder zum Schneeräumen mittels einer Planierschaufel, zum Anheben und Versetzen von Lasten mittels einer Staplergabel oder zum Reinigen des Bodens mittels eines Kehrbesens.

Vorteilhaft kann vorgesehen sein, an der Selbstladeeinrichtung einen zusätzlichen hydraulischen oder mechanischen Anschluß als Antrieb vorzusehen. Auf diese Weise kann unabhängig von der vorbeschriebenen automatischen Entleerung der Ladeschaufel eine bewußte Steuerung der Ladeschaufel bewirkt werden, so daß die Verteilung des Ladegutes auf der Mulde noch besser gesteuert werden kann. Zudem kann ein derartiger eigener Antrieb für das alternativ eingesetzte Werkzeug verwendet werden, beispielsweise zum Antrieb eines Kehrbesens, der anstelle der Ladeschaufel an der Selbstladeeinrichtung montiert wird. Der mechanische Antrieb kann beispielsweise durch Gelenkwellen od. dgl. erfolgen.

Als Mulde bei dem Muldenkipper kann eine drehbare Mulde vorgesehen sein oder auch eine Frontkippmulde.

Ein Ausführungsbeispiel der Erfindung wird anhand der Zeichnungen im folgenden näher erläutert. Dabei zeigen die
- Fig. 1: in perspektivischer Ansicht einen Teil eines Muldenkippers, wobei sich die Mulde und die Selbstladeeinrichtung in einer ersten Stellung befinden, die
- Fig. 2 bis 4: jeweils in einer Seitenansicht, ausgehend von der Stellung gemäß Fig. 1, einen Bewegungsablauf der Selbstladeeinrichtung, und die
- Fig. 5: in einer ebenfalls perspektivischen, jedoch von der Seite aus gesehenen Ansicht eine zweite Stellung von Mulde und Selbstladeeinrichtung des Muldenkippers.

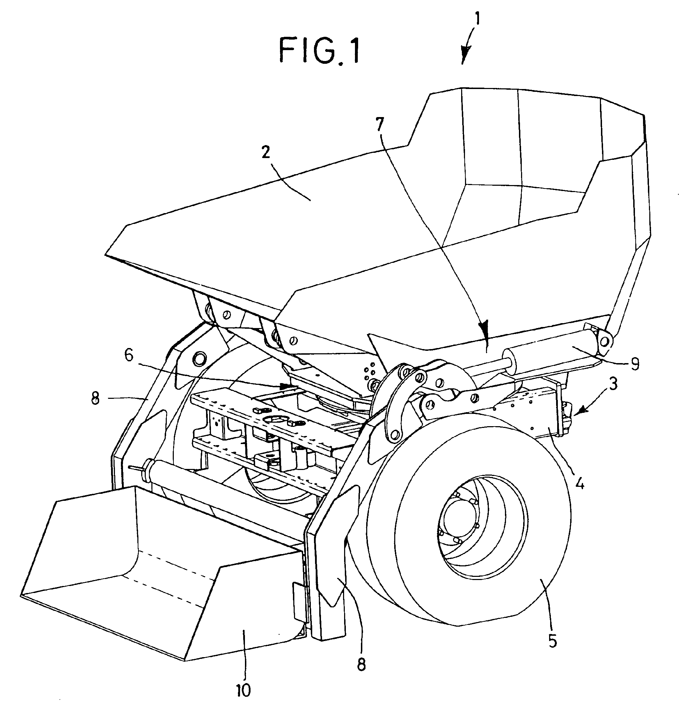

In Fig. 1 ist mit 1 allgemein ein Muldenkipper bezeichnet, wobei es sich um einen Knicklenker handelt. In der Zeichnung ist lediglich das vordere Fahrzeugteil dargestellt, welches eine Mulde 2 zur Aufnahme der Nutzlast aufweist. An einer Gelenkstelle 3, die das Knickgelenk des Fahrzeuges bildet, kann sich der hintere Fahrzeugteil anschließen mit dem Antriebsmotor und dem Fahrerplatz.

Ein Fahrzeugrahmen 4 trägt Laufräder 5 sowie eine drehbare Plattform 6, so daß die Mulde 2 abweichend von ihrer in Fahrzeuglängsrichtung angeordneten, aus Fig. 1 ersichtlichen Stellung auch seitlich verschwenkt werden kann, so daß das Ladegut nicht nur vor das Fahrzeug, sondern auch zu beiden Seiten des Fahrzeuges abgekippt werden kann.

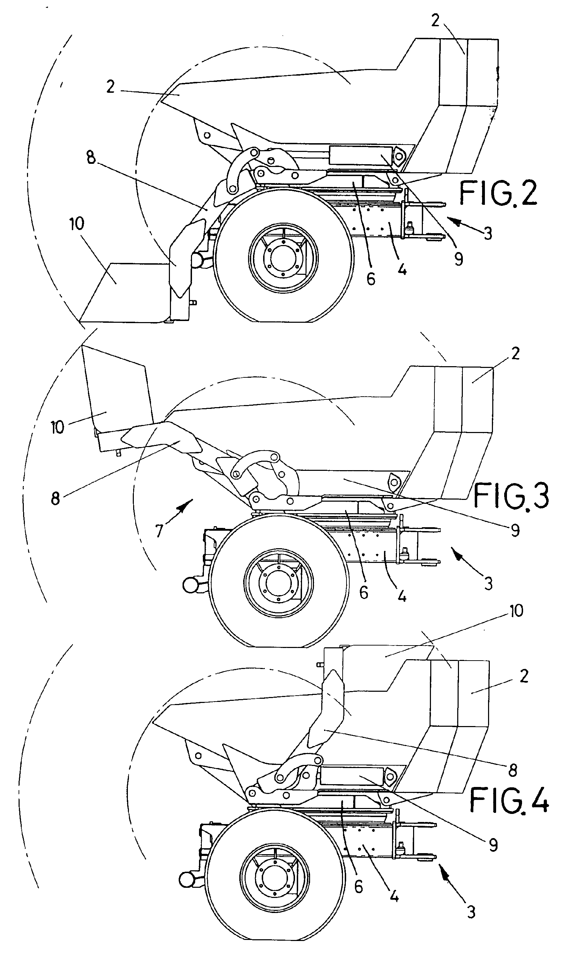

An der Mulde 2 ist eine Selbstladeeinrichtung befestigt, die insgesamt mit 7 bezeichnet ist. Sie weist eine Schwinge 8 auf, die mittels an ihrem einen Ende angreifender hydraulischer Kolben-Zylinder-Einheiten 9 aus ihrer abgesenkten, in den Fig. 1 und 2 dargestellten Stellung angehoben werden kann. An dem anderen Ende der Schwinge 8 ist eine Schaufel 10 vorgesehen, die als Ladeschaufel ausgestaltet ist und gegen andere Werkzeuge ausgewechselt werden kann, beispielsweise gegen eine Planierschaufel, gegen einen Kehrbesen oder gegen eine Staplergabel.

Fig. 2 zeigt die Anordnung der Fig. 1 in einer Seitenansicht. Ausgehend von dieser Anordnung kann durch Betätigung der Kolben-Zylinder-Einheiten 9 die Schwinge 8 angehoben werden, wie aus den Fig. 3 und 4 ersichtlich ist. Durch die starre Befestigung der Schaufel 10 an der Schwinge 8 bewegt sich die Schaufel 10 dabei zwangsläufig derart, daß ihr Inhalt über der Mulde 2 entleert wird. Durch mehrfache derartige Ladevorgänge kann die Mulde 2 vollständig gefüllt werden.

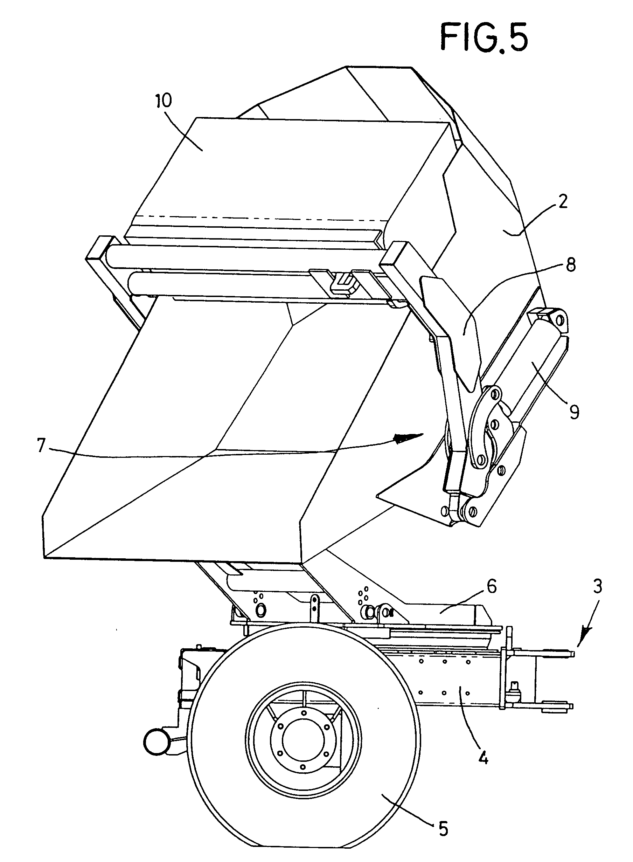

Wie insbesondere aus Fig. 5 ersichtlich ist, ist das gesamte Ladegeschirr der Selbstladeeinrichtung 7 an der Mulde 2 befestigt und wird mit dieser beim Entleeren der Mulde 2 gekippt sowie beim Verschwenken der Mulde um die Plattform 6 ebenfalls verschwenkt.

Fig. 5 zeigt eine derartige Stellung, bei der die Mulde 2 auf der Plattform 6 gedreht ist und seitlich zur Fahrzeuglängsachse verschwenkt ist. Weiterhin befindet sich in dieser Fig. 5 die Mulde 2 in ihrer angehobenen Kippstellung, in der das Transportgut aus der Mulde abgekippt wird. Gegenüber einer Selbstladeeinrichtung, die unmittelbar am Fahrzeugrahmen 4 befestigt wäre, ist bei der dargestellten Ausführung der Selbstladeeinrichtung 7 sichergestellt, daß diese bei sämtlichen Bewegungen der Mulde 2 nicht hinderlich im Wege ist. Die Selbstladeeinrichtung 7 befindet sich hier in ihrer Fahr- bzw. Ruhestellung, in welcher sie bis zu einem Anschlag angehoben ist, z. B. durch Anlage der Schaufel 10 an der Mulde 2.

## Patentansprüche

1. Muldenkipper,
mit einer Mulde zur Aufnahme von Nutzlast,
wobei die Mulde in einer ersten Bewegungsrichtung kippbeweglich gelagert ist zum Entladen der Nutzlast,
und wobei die Mulde darüber hinaus in einer zweiten Bewegungsrichtung zusätzlich beweglich gelagert ist,
und mit einer Selbstladeeinrichtung zum Beschicken der Mulde mit der Nutzlast,
**dadurch gekennzeichnet, daß** die Selbstladeeinrichtung (7) zusammen mit der Mulde (2) die zusätzlichen Bewegungen in der zweiten Bewegungsrichtung ausführend gelagert ist.

2. Muldenkipper nach Anspruch 1, **dadurch gekennzeichnet, daß** das Ladegeschirr der Selbstladeeinrichtung (7) an der Mulde (2) angeordnet ist.

3. Muldenkipper nach Anspruch 1 oder 2, **dadurch gekennzeichnet, daß** die Mulde (2) drehbar gelagert ist, derart, daß sie ein Entladen der Nutzlast in Längsrichtung oder zur Seite des Muldenkippers (1) ermöglicht.

4. Muldenkipper nach einem der vorhergehenden Ansprüche, **dadurch gekennzeichnet, daß** die Selbstladeeinrichtung (7) eine als Ladeschaufel ausgestaltete Schaufel (10) aufweist, welche an einer Schwinge (8) bogenförmig über die Mulde (2) führbar ist, wobei die Schaufel (10) während dieser Bewegung zwangsgeführt ist, derart, daß das in der Schaufel (10) befindliche Material in die Mulde (2) entleert wird.

5. Muldenkipper nach einem der vorhergehenden Ansprüche, **dadurch gekennzeichnet, daß** die Selbstladeeinrichtung (7) zur Aufnahme von Zusatzwerkzeugen ausgebildet ist, wobei eine Ladeschaufel der Selbstladeeinrichtung gegen eine Planierschaufel, eine Staplergabel, einen Kehrbesen oder ähnliche Werkzeuge auswechselbar ist.

6. Muldenkipper nach Anspruch 5, **dadurch gekennzeichnet, daß** eigene Antriebsmittel für das Werkzeug vorgesehen sind.
